# FASCICULE DE BREVET EUROPEEN

(11) **EP 3 146 183 B1**
(45) Date de publication et mention de la délivrance du brevet: **14.02.2018**
(21) Numéro de dépôt: 15732796.6
(22) Date de dépôt: 22.05.2015
(51) Int. Cl.: F02C 7/06, F02C 7/32, F16N 9/02, F16H 57/04

(54) **BOITE D'ENGRENAGES DE TURBOMACHINE D'AÉRONEF**
GETRIEBE EINES FLUGZEUGTURBINENMOTORS
GEARBOX OF AIRCRAFT TURBINE ENGINE

(30) Priorité: 23.05.2014 FR 1454679
(43) Date de publication de la demande: 29.03.2017
(73) Titulaire: Safran Aircraft Engines, 75015 Paris (FR)
(72) Inventeur: LEPRETRE, Jean-Baptiste, Etienne, Bernard, F-77550 Moissy-Cramayel cedex (FR)
(74) Mandataire: Gevers & Orès
(86) Numéro de dépôt international: PCT/FR2015/051374
(87) Numéro de publication internationale: WO 2015/177487

(56) Documents cités:
- EP-A1- 2 711 505
- GB-A- 2 488 142
- US-A- 3 621 937

## Description

### DOMAINE TECHNIQUE

La présente invention concerne une boîte d'engrenages de turbomachine.

### ETAT DE L'ART

L'état de l'art comprend notamment les documents EP-A1-2 711 505, US-A-3,621,937 et GB-A-2 488 142.

Une boîte d'engrenages de turbomachine d'aéronef, en particulier pour un turboréacteur ou un turbopropulseur d'avion ou d'hélicoptère, peut consister en une boîte d'accessoires (aussi appelée AGB, acronyme de l'anglais *Accessory Gear Box*) qui sert à entraîner des équipements de la turbomachine, tels que des pompes, des générateurs d'électricité, etc. La boîte d'accessoires transmet une puissance mécanique originaire de la turbomachine aux équipements par l'intermédiaire d'une chaîne cinématique composée d'éléments tournants tels que des pignons ou des roulements. Une boîte d'engrenages de turbomachine d'aéronef peut également consister en une boîte de transfert (aussi appelée TGB, acronyme de l'anglais *Transfer Gear Box*), par exemple pour relier cinématiquement une boîte d'accessoires à un arbre de turbine de la turbomachine en utilisant deux arbres de transfert formant éventuellement un angle et reliés entre eux par la boîte de transfert.

Une telle boîte d'engrenages, en particulier une boîte d'accessoires ainsi qu'une boîte de transfert, comprend un carter définissant une enceinte de logement des éléments tournants qui sont lubrifiés par de l'huile, cette huile pouvant en outre servir à refroidir le carter. La boîte d'engrenages comprend au moins un manchon tubulaire engrené avec au moins un élément tournant et configuré pour être accouplé et pour entraîner en rotation un arbre, par exemple un arbre de transfert ou encore l'arbre d'un équipement de la turbomachine. Ce manchon comporte une partie d'emboîtement femelle comportant des cannelures configurées pour coopérer avec des cannelures d'une partie d'emboîtement mâle de l'arbre.

Les cannelures de la partie d'emboîtement femelle du manchon et celles de la partie d'emboîtement mâle de l'arbre doivent être lubrifiées. Cette lubrification ne nécessite toutefois que très peu d'huile. Il suffit en effet d'assurer un niveau d'huile dans les cannelures pour lubrifier l'accouplement. Dans la technique actuelle, un gicleur fonctionnant en permanence est en général utilisé pour lubrifier ces cannelures. Le diamètre du gicleur ne peut pas être trop restreint, ce qui fait que les cannelures se retrouvent très souvent sur-lubrifiées. Ceci se traduit par une consommation inutile d'huile.

Le document US-A-5,119,905 illustre un art antérieur particulier relatif à une boîte d'accessoires dans laquelle un gicleur est utilisé par intermittence. Le jet d'huile projeté par le gicleur passe à travers un trou du manchon, à l'arrêt du moteur. Cette technologie présente un inconvénient lié au fait que le remplissage d'un réservoir annulaire alimentant en huile des cannelures ne s'effectue qu'à l'arrêt du moteur. Le renouvellement de l'huile affectée à la lubrification des cannelures ne s'effectue donc que de façon particulièrement discontinue dans le temps.

La présente invention a notamment pour but d'apporter une solution simple, efficace et économique à au moins une partie des problèmes précités.

### EXPOSE DE L'INVENTION

L'invention propose une boîte d'engrenages de turbomachine d'aéronef, comprenant un carter définissant une enceinte de logement d'éléments tournants lubrifiés par de l'huile, et au moins un manchon tubulaire accouplé aux éléments tournants et configuré pour entraîner en rotation un arbre, ce manchon comportant des cannelures femelles configurées pour coopérer avec des cannelures mâles dudit arbre, la boîte comprenant en outre des moyens de récupération d'huile de lubrification des éléments tournants et d'acheminement par ruissellement de l'huile récupérée jusqu'aux cannelures en vue de leur lubrification, lesdits moyens de récupération et d'acheminement comprenant au moins une paroi interne collectrice d'huile dudit carter, la boîte d'engrenages étant configurée pour faire ruisseler de l'huile sur ladite au moins une paroi interne collectrice lors du fonctionnement de la turbomachine, caractérisée en ce que lesdits moyens de récupération et d'acheminement comprennent un organe canalisateur qui s'étend au moins en partie à l'intérieur dudit manchon, et au moins une gouttière configurée pour acheminer l'huile qui ruisselle sur ladite au moins une paroi interne collectrice jusqu'à l'organe canalisateur, dans lequel ledit organe canalisateur et ladite au moins une gouttière sont portés par ou formés avec un flasque du carter, ce flasque définissant ladite au moins une paroi interne collectrice et servant de support pour un palier de roulement du manchon, le flasque comprenant une ouverture radiale permettant à l'huile ruisselant sur ladite paroi interne collectrice d'atteindre ledit organe canalisateur.

Les cannelures sont ainsi lubrifiées par de l'huile récupérée de lubrification d'éléments tournants et non pas par de l'huile dédiée exclusivement à la lubrification des cannelures. Au moins une partie de l'huile de lubrification des éléments tournants est ainsi récupérée et acheminée jusqu'aux cannelures sans apport direct d'huile d'un gicleur. Ceci permet de limiter la consommation en huile de lubrification de la boîte d'engrenages. Par ailleurs, la récupération et l'acheminement de l'huile peuvent être réalisés en continu pendant le fonctionnement du moteur, ce qui est avantageux par rapport à la technique antérieure.

L'invention permet d'optimiser l'encombrement de la boîte d'engrenages. Les moyens de récupération et d'acheminement ne gênent pas le guidage en rotation du manchon, puisque le palier au voisinage des moyens de récupération et d'acheminement s'intègrent parfaitement dans cette configuration grâce notamment à l'ouverture radiale prévue dans la paroi cylindrique de support du palier.

Selon un mode de réalisation de l'invention, le flasque présente une partie plane et une partie cylindrique creuse qui s'étend sensiblement perpendiculairement à la partie plane et qui supporte le palier de roulement, ledit organe canalisateur s'étendant à l'intérieur de la partie cylindrique depuis la partie plane, et au moins une ouverture radiale étant ménagée dans la partie cylindrique à la jonction avec la partie plane de façon à ce que de l'huile de ruissellement passe à travers ladite au moins une ouverture radiale pour être collectée dans ladite au moins une gouttière.

De préférence, les cannelures s'étendent dans une cavité annulaire longitudinale du manchon qui est délimitée à une extrémité longitudinale par un joint annulaire configuré pour coopérer avec ledit arbre, et à une extrémité longitudinale opposée par un barrage annulaire formé de préférence par un joint de niveau dont la périphérie externe définit un niveau d'huile maximal dans ladite cavité annulaire.

Avantageusement, le barrage annulaire s'étend dans un plan transversal qui est traversé par les moyens de récupération et d'acheminement.

Avantageusement, ledit flasque comprend deux gouttières formant ensemble un V avec un angle de l'ordre de 120-160°. La ou chaque gouttière peut avoir en section une forme sensiblement en U. La ou chaque gouttière peut s'étendre sensiblement radialement par rapport à l'axe de ladite partie cylindrique du flasque. La ou chaque gouttière peut être située dans un espace axial s'étendant entre ladite partie plane du flasque et une extrémité du manchon guidée par ledit palier. L'organe canalisateur peut avoir en section une forme sensiblement en U.

La présente invention concerne également une turbomachine, telle qu'un turboréacteur ou un turbopropulseur d'aéronef, caractérisée en ce qu'elle comprend une boîte d'engrenages telle que décrite ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique en perspective d'un exemple d'une boîte d'accessoires de turbomachine ;
- la figure 2 est une vue très schématique en coupe d'une boîte d'accessoires selon l'invention ;
- la figure 3 est une vue schématique en coupe d'une boîte d'accessoires selon un exemple de réalisation de l'invention, et
- la figure 4 est une vue partielle en perspective d'un flasque de carter de la boîte d'accessoires de la figure 3.

### DESCRIPTION DETAILLEE

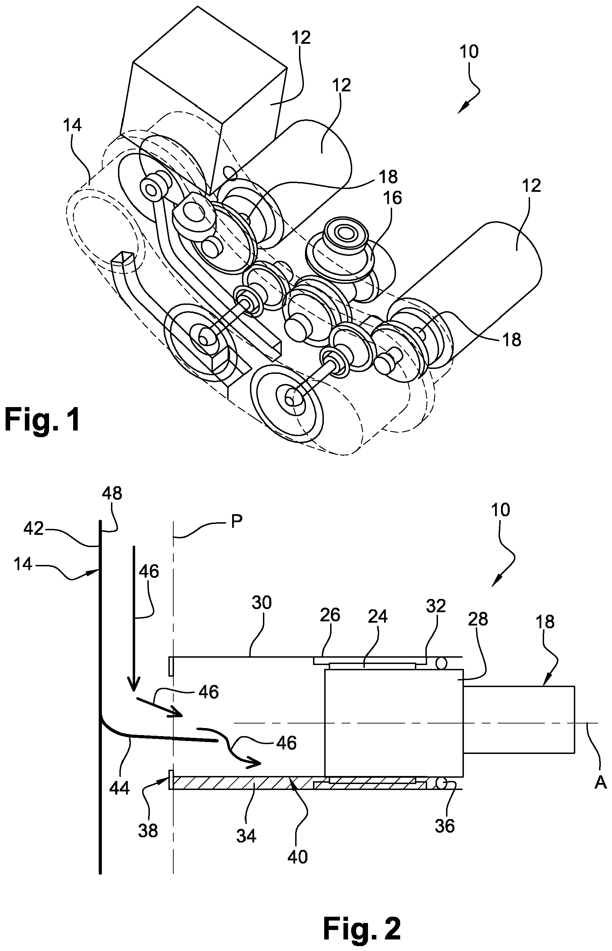

On se réfère d'abord à la figure 1 qui représente un exemple d'une boîte d'accessoires 10 pour l'entraînement d'équipements 12 d'une turbomachine telle qu'un turboréacteur ou un turbopropulseur d'aéronef. Une telle boîte d'accessoires est décrite notamment dans le document FR-A1-2 941 744.

Cette boîte d'accessoires 10 est destinée à prélever une puissance mécanique originaire de la turbomachine et à la transmettre aux équipements qui sont des pompes, des générateurs d'électricité, etc. La transmission s'effectue par une chaîne cinématique composée d'éléments tournants engrenés les uns aves les autres pour former des lignes d'engrenages ou d'accessoires.

La boîte d'accessoires 10 comprend un carter 14 définissant une enceinte de logement des éléments tournants qui comprennent par exemple des pignons et des roulements. La chaîne cinématique est reliée à un arbre d'entraînement 16 qui est un arbre radial de la turbomachine ou un arbre intermédiaire, la chaîne étant également reliée à des arbres 18 de prise de mouvement des équipements. La boîte d'accessoires 10 est fixée à la turbomachine et les équipements sont en général eux-mêmes fixés à la boîte d'accessoires 10.

La figure 2 représente un mode de réalisation de l'invention. Les chiffres de référence 10, 14 et 18 sont également utilisés pour désigner respectivement la boîte d'accessoires, son carter et l'arbre d'un équipement. L'exemple de boîte d'engrenages selon l'invention décrit en référence aux figures 2 à 4 concerne une boîte d'accessoires, mais il est entendu que la réalisation décrite dans la présente est aussi applicable à une boîte de transfert.

L'accouplement de l'arbre 18 à la chaîne cinématique de la boîte d'accessoires 10 est réalisé au moyen de cannelures 24, 26. L'arbre 18 comprend une partie d'extrémité 28 mâle destinée à être emboitée dans un manchon 30 constituant une partie tubulaire d'un élément tournant ou pignon de la boîte d'accessoires, cette partie d'extrémité 28 comportant des cannelures externes ou mâles 24 qui sont de préférence des cannelures rectilignes s'étendant sensiblement parallèlement à l'axe A de rotation de l'arbre 18.

La boîte d'accessoires 10 comprend un ou plusieurs manchons 30 de pignons, chaque manchon servant à entraîner en rotation un arbre 18 d'équipement et à transmettre la puissance de la chaîne cinématique à cet arbre.

Le manchon 30 comprend une partie d'extrémité 32 femelle destinée à recevoir la partie d'extrémité 28 de l'arbre 18, cette partie d'extrémité 32 comportant des cannelures internes ou femelles 26 sensiblement complémentaires aux cannelures 24. Elles sont donc de préférence rectilignes en s'étendant sensiblement parallèlement à l'axe A de rotation de l'arbre 18.

Les cannelures 24, 26 s'étendent ici dans une cavité longitudinale interne 34 du manchon 30 qui est délimitée à une extrémité, située du côté de l'arbre 18, par un joint annulaire 36 et à l'extrémité opposée par un barrage annulaire 38. Le joint annulaire 36 est porté par le manchon 30 et est destiné à coopérer avec l'arbre 18 pour assurer une étanchéité à l'huile entre le manchon 30 et l'arbre 18. En variante, le joint 36 pourrait être porté par l'arbre 18 et coopérer avec le manchon 30. Le barrage annulaire 38 est de préférence formé par un joint annulaire de niveau. La cavité 34 permet de stocker un volume d'huile déterminé dans lequel baignent les cannelures 24, 26. Le joint de niveau (barrage 38) est configuré pour définir un niveau maximal 40 d'huile dans la cavité 34, le surplus d'huile étant alors évacué de la cavité 34 en s'écoulant à travers le joint de niveau.

Le manchon 30 est rotatif et entraîné en rotation par au moins un élément tournant de la boîte d'accessoires, par exemple un autre pignon. Pour cela, le manchon peut comprendre à sa périphérie externe une roue dentée adaptée pour être engrenée avec la roue dentée d'un autre pignon. Le manchon 30 et sa roue dentée constituent un pignon.

Les éléments tournants de la boîte d'accessoires 10 sont lubrifiés par de l'huile qui peut être amenée dans l'enceinte interne du carter 14 par des gicleurs par exemple.

Selon l'invention, la boîte d'accessoires 10 comprend des moyens de récupération d'huile de lubrification des éléments tournants et d'acheminement par ruissellement de l'huile récupérée jusqu'aux cannelures 24, 26. Ces moyens comprennent ici une paroi ou un flasque 42 du carter 14 sur lequel s'écoule au moins une partie de l'huile qui a servi à lubrifier les éléments tournants. Ce flasque 42, qui fait office de couvercle d'étanchéité pour le carter, comprend ou porte au moins une paroi interne 48 collectrice d'huile de lubrification des éléments tournants et un organe canalisateur 44 qui a une forme allongée et s'étend en partie à l'intérieur du manchon 30 de façon à ce que son extrémité longitudinale libre soit située au plus prés de la cavité 34 du manchon 30 et que l'huile puisse être acheminée et se déverser simplement par ruissellement et gravité jusqu'à cette cavité 34 (flèches 46). Le joint de niveau (barrage annulaire 38) s'étend ainsi dans un plan transversal P qui est traversé par l'organe canalisateur 44. Avantageusement, le ruissellement par l'organe 44 est prévu suffisant pour compenser une éventuelle fuite d'huile peu importante au niveau du joint 36.

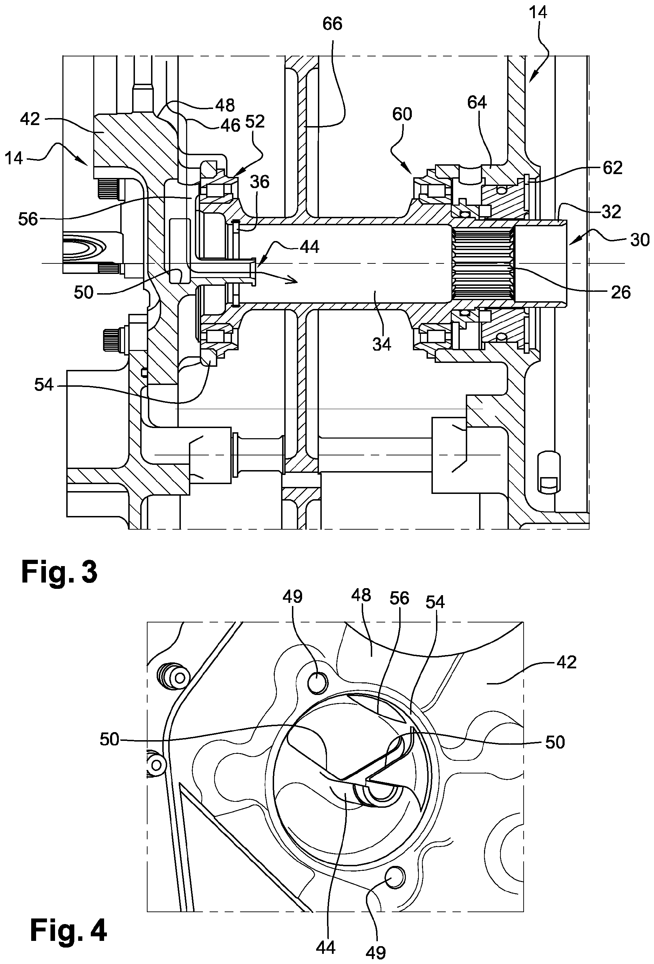

Les figures 3 et 4 représentent un exemple plus concret de réalisation de la boîte d'accessoires 10 selon l'invention et en particulier de son flasque 42 portant les moyens de récupération et d'acheminement d'huile.

Le flasque 42 est ici formé d'une seule pièce et comprend notamment une partie plane sur la face interne de laquelle est formé au moins un renfoncement définissant une paroi interne collectrice 48 telle que décrite dans ce qui précède.

Le flasque 42 comprend également une partie cylindrique 54 creuse qui s'étend sensiblement perpendiculairement à la partie plane et qui supporte un palier de roulement 52 du manchon. La paroi interne collectrice 48 est sensiblement perpendiculaire à l'axe de cette partie cylindrique 54. Le palier de roulement 52 comprend une bague externe montée dans une partie d'extrémité libre de la partie cylindrique 54 et une bague interne montée autour d'une partie d'extrémité du manchon 30, opposée aux cannelures 26. Le manchon 50 est ainsi en partie engagé, par une partie d'extrémité, dans la partie cylindrique 54 du flasque 42. Cette partie d'extrémité est toutefois à distance axiale de la partie plane du flasque 42 pour autoriser un écoulement d'huile entre eux (flèche 46), comme cela sera décrit dans ce qui suit.

La partie cylindrique 54 est ici formée par un bossage du flasque qui comprend des extensions radiales externes dans lesquelles sont prévus des orifices 49 taraudés de vissage de vis de fixation de la bague externe du palier 52 au flasque 42.

La partie cylindrique 54 comprend une ouverture radiale 56 à la jonction avec la paroi 48 de la partie plane du flasque 42. De l'huile peut ainsi ruisseler sur la paroi 48 jusqu'à l'intérieur de la partie cylindrique 54, en passant par l'ouverture 56.

Le flasque 42 comprend en outre, radialement à l'intérieur de la partie cylindrique 54, l'organe canalisateur 44 précité ainsi que deux gouttières 50 qui servent à collecter l'huile passant à travers l'ouverture radiale 56 et à l'acheminer jusqu'à l'extrémité longitudinale de l'organe 44 reliée à la partie plane du flasque 42.

Chaque gouttière 50 a en section une forme sensiblement en U et s'étend sensiblement radialement par rapport à l'axe de la partie cylindrique 54, sensiblement depuis cet axe jusqu'à la partie cylindrique 54. Les gouttières 50 forment ensemble un V avec un angle de l'ordre de 120-160° environ. Les gouttières 50 sont situées sensiblement dans l'espace axial s'étendant entre la partie plane du flasque 42 et l'extrémité du manchon 30 guidée par le palier 52.

L'organe canalisateur 44 a en section une forme sensiblement en U et s'étend en partie à l'intérieur du manchon 30 pour pouvoir déverser l'huile récupérée dans la cavité interne 34 du manchon. La cavité 34 est délimitée par le joint de niveau (barrage 38) et par le joint d'étanchéité précité (joint 36 sur la figure 2) qui est ici porté par l'arbre et qui n'est donc pas représenté. Ce joint d'étanchéité est destiné à coopérer avec une surface cylindrique interne du manchon 30.

La partie d'extrémité du manchon 30 comportant les cannelures 26 est guidée par un autre palier 60 et est en outre entourée par un joint d'étanchéité 62 dynamique, le palier 60 et le joint 62 étant monté dans une paroi cylindrique 64 du carter 14.

Le manchon 30 est en outre solidaire d'une roue 66 à denture externe de façon à former un pignon.

Le flasque 42 des figures 3 et 4 peut être réalisé de fonderie par exemple, ou encore par usinage.

Comme cela est schématiquement représenté par la flèche 46 en figure 3, l'huile qui est projetée ou se déverse en fonctionnement sur la paroi collectrice 48 ruisselle jusqu'à l'ouverture 56 et pénètre dans la paroi cylindrique 54 pour être recueillie dans les gouttières 50 qui achemine cette huile jusqu'à l'organe canalisateur 44. Cette huile s'écoule ensuite dans la cavité interne 34 du manchon 30 en vue de la lubrification des cannelures 26 ainsi que de celles de l'arbre d'équipement correspondant. Du fait que l'organe canalisateur 44 traverse le plan transversal dans lequel s'étend le joint de niveau (barrage annulaire 38), l'huile qui s'écoule par gravitation à l'extrémité libre de cet organe canalisateur tombe nécessairement dans la cavité interne 34 du manchon 30.

Il est ainsi assuré un renouvellement continu de l'huile contenue dans la cavité interne 34. En effet, lors du fonctionnement de la turbomachine, tout l'espace annulaire de la cavité interne 34 se remplit d'huile sous l'effet de la force centrifuge due à la rotation du manchon 30. L'huile s'écoulant dans le manchon 30 depuis l'organe canalisateur 44 se mélange à l'huile de la cavité interne 34. L'excédent d'huile dans la cavité interne 34 déborde par-dessus le joint de niveau 38 pour retourner dans le carter, voire également pour participer à la lubrification du palier 52.

L'organe canalisateur 44 est agencé avantageusement pour s'étendre sensiblement à l'horizontale une fois la boîte d'accessoires installée dans la turbomachine, ou pour former une légère pente par rapport à l'horizontale dans la plupart des attitudes de vol de façon à favoriser l'écoulement de l'huile par gravitation. L'écoulement de l'huile dans la cavité interne 34 n'est ainsi pas interrompu, hormis lors d'attitudes de vol exceptionnelles et de courtes durée. Il pourra être prévu par exemple que l'ouverture du manchon 30 du côté du joint de niveau 38 soit orientée vers l'avant de l'aéronef, de telle façon que pendant le vol l'écoulement de l'huile dans la cavité interne 34 depuis l'organe canalisateur 44 puisse être interrompu uniquement lors d'une éventuelle phase de vol en forte inclinaison vers le bas (notamment en cas d'accélération en piqué).

Par ailleurs, le joint de niveau 38 possède avantageusement une hauteur radiale suffisante pour qu'à l'arrêt de la turbomachine, c'est à dire quand les éléments tournants de la boite d'accessoires ne sont plus en rotation, une partie des cannelures du manchon et de l'arbre barbote dans l'huile retenue dans le bas de la cavité interne 34. Au redémarrage de la turbomachine, la totalité des cannelures se retrouve rapidement lubrifiée par cette huile retenue.

## Revendications

1. Boîte d'engrenages (10) de turbomachine d'aéronef, comprenant un carter (14) définissant une enceinte de logement d'éléments tournants lubrifiés par de l'huile, et au moins un manchon tubulaire (30) accouplé aux éléments tournants et configuré pour entraîner en rotation un arbre (18), ce manchon comportant des cannelures (26) configurées pour coopérer avec des cannelures complémentaires (24) dudit arbre, la boîte comprenant en outre des moyens (42, 44, 48, 50) de récupération d'huile de lubrification des éléments tournants et d'acheminement par ruissellement de l'huile récupérée jusqu'aux cannelures en vue de leur lubrification, lesdits moyens de récupération et d'acheminement (42, 44, 48, 50) comprenant au moins une paroi interne (48) collectrice d'huile dudit carter (14), la boîte d'engrenages étant configurée pour faire ruisseler de l'huile sur ladite au moins une paroi interne collectrice lors du fonctionnement de la turbomachine, **caractérisée en ce que** lesdits moyens de récupération et d'acheminement (42, 44, 48, 50) comprennent un organe canalisateur (44) qui s'étend au moins en partie à l'intérieur dudit manchon (30), et au moins une gouttière (50) configurée pour acheminer l'huile qui ruisselle sur ladite au moins une paroi interne collectrice (48) jusqu'à l'organe canalisateur (44), dans laquelle ledit organe canalisateur (44) et ladite au moins une gouttière (50) sont portés par ou formés avec un flasque (42) du carter, ce flasque définissant ladite au moins une paroi interne collectrice (48) et servant de support pour un palier (52) de roulement du manchon (30), le flasque (42) comprenant une ouverture radiale (56) permettant à l'huile ruisselant sur ladite paroi interne collectrice (48) d'atteindre ledit organe canalisateur (44).

2. Boîte d'engrenages (10) selon la revendication 1, dans lequel le flasque (42) présente une partie plane et une partie cylindrique (54) creuse qui s'étend sensiblement perpendiculairement à la partie plane et qui supporte le palier de roulement (52), ledit organe canalisateur (44) s'étendant à l'intérieur de la partie cylindrique depuis la partie plane, et au moins une ouverture radiale (56) étant ménagée dans la partie cylindrique à la jonction avec la partie plane de façon à ce que de l'huile de ruissellement passe à travers ladite au moins une ouverture radiale pour être collectée dans ladite au moins une gouttière (50).

3. Boîte d'engrenages (10) selon la revendication 1 ou 2, dans laquelle lesdites cannelures (26) s'étendent dans une cavité annulaire longitudinale (34) du manchon (30) qui est délimitée à une extrémité longitudinale par un joint annulaire (36) configuré pour coopérer avec ledit arbre (18), et à une extrémité longitudinale opposée par un barrage annulaire (38) formé de préférence par un joint de niveau dont la périphérie externe définit un niveau d'huile maximal dans ladite cavité annulaire (34).

4. Boîte d'engrenages (10) selon la revendication 3, dans laquelle ledit barrage annulaire (38) s'étend dans un plan transversal (P) qui est traversé par les moyens de récupération et d'acheminement (42, 44, 48, 50).

5. Boîte d'engrenages (10) selon l'une des revendications précédentes, dans laquelle ledit flasque comprend deux gouttières formant ensemble un V avec un angle de l'ordre de 120-160°.

6. Boîte d'engrenages (10) selon l'une des revendications précédentes, dans laquelle la ou chaque gouttière a en section une forme sensiblement en U.

7. Boîte d'engrenages (10) selon l'une des revendications précédentes, dans laquelle la ou chaque gouttière s'étend sensiblement radialement par rapport à l'axe de ladite partie cylindrique du flasque.

8. Boîte d'engrenages (10) selon l'une des revendications précédentes, dans laquelle la ou chaque gouttière est située dans un espace axial s'étendant entre ladite partie plane du flasque et une extrémité du manchon guidée par ledit palier.

9. Boîte d'engrenages (10) selon l'une des revendications précédentes, dans laquelle l'organe canalisateur a en section une forme sensiblement en U.

10. Turbomachine d'aéronef, telle qu'un turboréacteur ou un turbopropulseur d'avion ou d'hélicoptère, **caractérisée en ce qu'**elle comprend au moins une boîte d'engrenages (10) selon l'une des revendications précédentes.

## Patentansprüche

1. Getriebekasten (10) einer Luftfahrzeug-Turbomaschine, umfassend ein Gehäuse (14), das einen Gehäuseraum rotierender Elemente geschmiert durch Öl definiert, und mindestens eine rohrförmige Hülse (30), die mit den rotierenden Elementen gekuppelt ist und dazu konfiguriert ist, eine Welle (18) in Rotation anzutreiben, wobei die Hülse Rillen (26) umfasst, die dazu konfiguriert sind, mit komplementären Rillen (24) der Welle zusammenzuwirken, wobei der Kasten außerdem Mittel (42, 44, 48, 50) zum Rückgewinnen des Schmieröls der rotierenden Elemente und zum Befördern, mittels Rieseins, des rückgewonnenen Öls bis zu den Rillen zwecks ihrer Schmierung, wobei die Mittel (42, 44, 48, 50) zum Rückgewinnen und zum Befördern mindestens eine das Öl des Gehäuses (14) sammelnde Innenwand (48) aufweisen, wobei der Getriebekasten dazu konfiguriert ist, das Öl während des Betriebs der Turbomaschine der auf die mindestens eine sammelnde Innenwand rieseln zu lassen, **dadurch gekennzeichnet, dass** die Mittel (42, 44, 48, 50) zum Rückgewinnen und zum Befördern ein Kanalisierorgan (44), das sich zumindest teilweise innerhalb der Hülse (30) erstreckt, und mindestens eine Rinne (50) umfassen, die dazu konfiguriert ist, das Öl, das auf die mindestens eine sammelnde Innenwand (48) rieselt, bis zum Kanalisierorgan (44) zu befördern, wobei das Kanalisierorgan (44) und die mindestens eine Rinne (50) mittels eines Flanschs (42) des Gehäuses getragen werden oder mit diesem ausgebildet sind, wobei der Flansch die mindestens eine sammelnde Innenwand (48) definiert und als Stütze für ein Wälzlager (52) der Hülse (30) dient, wobei der Flansch (42) eine radiale Öffnung (56) umfasst, die es erlaubt, dass das auf die sammelnde Innenwand (48) rieselnde Öl das Kanalisierorgan (44) erreicht.

2. Getriebekasten (10) nach Anspruch 1, wobei der Flansch (42) einen ebenen Teil und einen zylindrischen hohlen Teil (54) hat, der sich im Wesentlichen senkrecht zu dem ebenen Teil erstreckt, und der das Wälzlager (52) stützt, wobei sich das Kanalisierorgan (44) zum Inneren des zylindrischen Teils von dem ebenen Teil erstreckt, und wobei mindestens eine radiale Öffnung (56), die im zylindrischen Teil an der Aneinanderfügung mit dem ebenen Teil auf eine Weise angeordnet ist, dass das Riesel-Öl durch die mindestens eine radiale Öffnung hindurchgeht, um in der mindestens einen Rinne (50) gesammelt zu werden.

3. Getriebekasten (10) nach Anspruch 1 oder 2, wobei sich die Rillen (26) in einem ringförmigen longitudinalen Hohlraum (34) der Hülse (30) erstrecken, der von einem longitudinalen Ende durch eine ringförmige Aneinanderfügung (36), die dazu konfiguriert ist, mit der Welle (18) zusammenzuwirken, und einem longitudinalen Ende, das einer ringförmigen Sperre (38) gegenüberliegt, die vorzugsweise durch eine ebene Aneinanderfügung gebildet ist, deren Umfang ein maximales Ölniveau in dem ringförmigen Hohlraum (34) definiert, begrenzt ist.

4. Getriebekasten (10) nach Anspruch 3, wobei sich die ringförmige Sperre (38) in einer transversalen Ebene (P) erstreckt, die durch die Mittel (42, 44, 48, 50) zum Rückgewinnen und zum Befördern gequert wird.

5. Getriebekasten (10) nach einem der vorhergehenden Ansprüche, wobei der Flansch zwei Rinnen umfasst, die zusammen ein V mit einem Winkel im Bereich von 120-160° bilden.

6. Getriebekasten (10) nach einem der vorhergehenden Ansprüche, wobei die oder jede Rinne einen Abschnitt hat, der im Wesentlichen U-förmig ausgebildet ist.

7. Getriebekasten (10) nach einem der vorhergehenden Ansprüche, wobei sich die oder jede Rinne im Wesentlichen radial im Verhältnis zu der Achse des zylindrischen Teils des Flanschs erstreckt.

8. Getriebekasten (10) nach einem der vorhergehenden Ansprüche, wobei sich die oder jede Rinne in einem axialen Raum befindet, der sich zwischen dem ebenen Bereich des Flanschs und einem Ende der Hülse erstreckt, die von dem Lager geführt wird.

9. Getriebekasten (10) nach einem der vorhergehenden Ansprüche, wobei das Kanalisierorgan einen Abschnitt hat, der im Wesentlichen U-förmig ausgebildet ist.

10. Luftfahrzeug-Turbomaschine, z. B. Turboluftstrahltriebwerk oder Turbopropellertriebwerk eines Flugzeugs oder Hubschraubers, **dadurch gekennzeichnet, dass** sie mindestens einen Getriebekasten (10) nach einem der vorhergehenden Ansprüche umfasst.

## Claims

1. A gearbox (10) for an aircraft turbine engine, comprising a casing (14) defining an enclosure for housing rotating elements lubricated by oil, and at least one tubular sleeve (30) coupled to the rotating elements and configured to rotate a shaft (18), this sleeve including splines (26) configured to cooperate with complementary splines (24) of said shaft, the box further comprising means (42, 44, 48, 50) for recovering lubricating oil from the rotating elements and conveying recovered oil by streaming to the splines to lubricate them, said recovery and conveying means (42, 44, 48, 50) comprising at least one inner wall (48) collecting oil from said casing (14), the gearbox being configured to cause the oil to stream over said at least one collecting inner wall during the operation of the turbine engine, **characterized in that** said recovery and conveying means (42, 44, 48, 50) comprise a channeling member (44) that extends at least partially inside said sleeve (30), and at least one gutter (50) configured to convey the oil that streams over said at least one collecting inner wall (48) to the channeling member (44), in which said channeling member (44) and said at least one gutter (50) are supported by or formed with a flange (42) of the casing, this flange defining said at least one collecting inner wall (48) and serving as a support for rolling bearing (52) of the sleeve (30), the flange (42) including at least one radial opening (56) allowing oil flowing on said collecting inner wall (48) to reach said channeling member (44).

2. The gearbox (10) according to claim 1, wherein the flange (42) has a planar part and a hollow cylindrical part (54) that extends substantially perpendicular to the planar part and that supports the rolling bearing (52), said channeling member (44) extending inside the cylindrical part from the planar part, and said at least one radial opening (56) being arranged in the cylindrical part at the junction with the planar part such that the streaming oil passes through said at least one radial opening to be collected in said at least one gutter (50).

3. The gearbox (10) according to claim 1 or 2, wherein said splines (26) extend in a longitudinal annular cavity (34) of the sleeve (30) that is defined at one longitudinal end by an annular seal (36) configured to cooperate with said shaft (18), and an opposite longitudinal end by an annular dam (38) preferably formed by a leveling seal whereof the outer periphery defines the maximum oil level in said annular cavity (34).

4. The gearbox (10) according to claim 3, wherein the annular dam (38) extends in a transverse plane (P) that is traversed by the recovery and conveying means (42, 44, 48, 50).

5. The gearbox (10) according to one of the preceding claims, wherein said flange comprises two gutters together forming a V with an angle of about 120-160°.

6. The gearbox (10) according to one of the preceding claims, wherein the or each gutter has a substantially U-shaped section.

7. The gearbox (10) according to one of the preceding claims, wherein the or each gutter extends substantially radially relative to the axis of said cylindrical part of the flange.

8. The gearbox (10) according to one of the preceding claims, wherein the or each gutter is situated in an axial space extending between said planar part of the flange and an end of the sleeve guided by said bearing.

9. The gearbox (10) according to one of the preceding claims, wherein the channeling member can have a substantially U-shaped section.

10. An aircraft turbine engine, such as an airplane or helicopter turbojet engine or turboprop, **characterized in that** it comprises at least one gearbox (10) according to any one of the preceding claims.
